(19) Europäisches Patentamt / European Patent Office / Office européen des brevets

(11) **EP 3 531 171 A1**

(12) **EUROPÄISCHE PATENTANMELDUNG**

(43) Veröffentlichungstag:
**28.08.2019 Patentblatt 2019/35**

(51) Int Cl.:
***G01V 8/14*** *(2006.01)*

(21) Anmeldenummer: **19157818.6**

(22) Anmeldetag: **18.02.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **27.02.2018 DE 102018104404**

(71) Anmelder: **Sick AG**
**79183 Waldkirch (DE)**

(72) Erfinder: **Prinz, Oliver**
**79104 Freiburg (DE)**

(54) **OPTOELEKTRONISCHER SENSOR UND VERFAHREN ZUM ERFASSEN EINES OBJEKTS**

(57) Es wird ein optoelektronischer Sensor (10) mit einem Lichtsender (12) zum Aussenden eines Lichtstrahls (16) in einen Überwachungsbereich (18), einem in dem Überwachungsbereich (18) angeordneten Reflektor (20), einem Lichtempfänger (28) zum Erzeugen eines Empfangssignals aus dem von dem Reflektor (20) zurückgeworfenen Lichtstrahl (24) und einer Steuer- und Auswertungseinheit (30) angegeben, die dafür ausgebildet ist, anhand des Empfangssignals zu bestimmen, ob der Lichtstrahl (16) ein Objekt (22) getroffen hat. Dabei sind Lichtempfänger (28) und/oder Steuer- und Auswertungseinheit (30) dafür ausgebildet, eine Dopplerverschiebung des zurückgeworfenen Lichtstrahls (24) zu bestimmen.

Figur 1

EP 3 531 171 A1

**Beschreibung**

Die Erfindung betrifft einen optoelektronischen Sensor und ein Verfahren zum Erfassen eines Objekts nach dem Oberbegriff von Anspruch 1 beziehungsweise 13.

Optoelektronische Sensoren sind in der Lage, einen Überwachungsbereich auf Eingriffe durch Objekte zu überwachen. Neben komplexeren Sensoren, wie Kameras oder Laserscannern, werden vielfach einfache Lichttaster und Lichtschranken eingesetzt, die Objekte nur in dem eindimensionalen Erfassungsbereich ihres Lichtstrahls erkennen. Für einige Klassen solcher Sensoren wird ein kooperativer Reflektor im Strahlengang angeordnet und die Erwartung aufgestellt, diesen Reflektor zu erfassen.

Ein Beispiel eines derartigen Sensors ist eine Reflexionslichtschranke. Sie sendet aus einer Lichtquelle einen Lichtstrahl auf einen am gegenüberliegenden Ende eines Überwachungsbereichs angebrachten Reflektor, von dem der Lichtstrahl zurückgeworfen wird. Der derart zurückgeworfene Lichtstrahl wird dann von einem in der Nähe des Lichtsenders angeordneten Lichtempfänger erkannt. Ist der Lichtstrahl unterbrochen, so empfängt der Lichtempfänger nichts oder zumindest weniger Licht und löst eine Objekterkennungsfunktion aus.

Dabei wird das Licht beim Senden und Empfang durch eine strahlformende Optik geleitet. Ist diese Optik für Sende- und Empfangsstrahl dieselbe, so spricht man von Autokollimation. Alternativ kann gemäß dem Doppelaugenprinzip Lichtsender und Lichtempfänger jeweils eine Linse zugeordnet sein, wobei beide Linsen eng benachbart sind.

Ein zu verhindernder Schaltfehler bei einer Reflexionslichtschranke kann nun entstehen, wenn ein spiegelndes oder sehr helles Objekt in den Strahlengang eintritt. Dieses Objekt remittiert möglicherweise so viel Licht, dass die Lichtschranke fälschlich keine Strahlenunterbrechung erkennt.

Herkömmlich wird dieses Problem mit polarisiertem Licht gelöst. Dazu wird der Sendestrahl polarisiert. Der Retroreflektor erhält die Polarisation an sich und wechselt nur deren Orientierung. Ein Polfilter vor dem Empfänger, der zu dem Polarisator gekreuzt angeordnet ist, lässt daher den Empfangsstrahl ungehindert passieren. Wird der Sendestrahl dagegen von einem Spiegel oder einem hellen Objekt remittiert, so ist er in der falschen Richtung polarisiert oder verliert seine Polarisationseigenschaften, so dass der entstehende Empfangsstrahl von dem Polarisationsfilter nahezu komplett ausgeblendet wird. Auch Spiegel und helle Objekte werden dadurch als Strahlunterbrechung erkannt.

Da das von einem spiegelnden oder hellen Objekt remittierte Licht auch eine für den Polfilter richtig ausgerichtete Komponente enthält, können sehr helle oder sehr stark reflektierende Objekte doch wieder ein Empfangssignal liefern. Erst recht gilt das für Objekte mit ähnlichen Eigenschaften wie der Reflektor, etwa eine dünne Folie, die sogar größere Anteile Empfangslicht mit gedrehter Polarisation erzeugen. Das kann die Reflexionslichtschranke dann trotz der Polarisationsfilter nicht unterscheiden, und so kommt es weiterhin zumindest gelegentlich zum Fehlschalten.

Es gibt im Stand der Technik zahlreiche Dokumente, die sich mit Polarisatoren in optoelektronischen Sensoren befassen. In der DE 10 2006 048 297 A1 wird als Optik eine Fresnellinse oder ein Beugungsgitter verwendet, die eine geringe spannungsoptische Doppelbrechung aufweisen und so die Polarisation nicht stören. Die DE 199 13 156 B4 nutzt zwei Empfänger mit um einen Winkel zwischen 45° und 135° gegeneinander verdrehter linearer Polarisation, um verschiedene Polarisationskomponenten zu erfassen. Die EP 2 256 522 B1 und die DE 10 2006 053 229 B4 verwenden jeweils eine Autokollimationsanordnung mit Polarisatoren, wobei in DE 10 2006 053 229 B4 zudem ein besonderer Strahlteiler mit vorteilhaften Polarisationseigenschaften eingesetzt ist. Die DE 10 2011 050 634 B4 befasst sich mit der Ausgestaltung eines Retroreflektors, um dessen polarisationsdrehende Eigenschaften zu verbessern. In der DE 198 01 632 C2 wird vor dem Reflektor ein zusätzlicher Reflektorpolarisator angeordnet. Die DE 10 2016 121 395 A1 misst mit einem Lichtlaufzeitverfahren Distanzen zu einer Reflektoreinheit und unterscheidet diese anhand erwarteter Eigenschaften der elektromagnetischen Wellen von anderen Objekten, wobei eine dieser Eigenschaften die Polarisation sein kann.

Allerdings wird in keinem dieser Dokumente das Problem einer Verwechslung des Reflektors mit einem Objekt gelöst, das zufällig ausreichend ähnliche Polarisationseigenschaften aufweist, und sei es als prozentual geringer Anteil des Empfangslichts, der aber aufgrund hohen Gesamtpegels ausreicht, das Objekt fälschlich als den Reflektor zu erkennen.

Es ist daher Aufgabe der Erfindung, die Objekterkennung eines gattungsgemäßen Sensors weiter zu verbessern.

Diese Aufgabe wird durch einen optoelektronischen Sensor und ein Verfahren zum Erfassen eines Objekts nach Anspruch 1 beziehungsweise 13 gelöst. Der Sensor hat den Grundaufbau eines Lichttasters mit einer Sende-Empfangseinheit aus einem Lichtsender zum Aussenden eines Lichtstrahls in Richtung eines kooperativen Reflektors und einem Lichtempfänger zum Empfangen des dort zurückgeworfenen Lichtstrahls. Es wird dann das Empfangssignal ausgewertet, um festzustellen, ob der Reflektor noch erfasst ist oder der Lichtstrahl ein Objekt vor dem Reflektor getroffen hat, das den Lichtweg zu dem Reflektor unterbricht.

Die Erfindung geht nun von dem Grundgedanken aus festzustellen, ob durch die Reflexion eine Dopplerverschiebung aufgetreten ist, und diese dann zu messen. Die Dopplerverschiebung kann genutzt werden, um den Reflektor zu identifizieren und von einem Objekt im Strahlengang zu unterscheiden. Je nach Ausführungsform erfordert die Bestimmung einer Dopplerverschiebung einen besonderen Lichtempfänger, eine entsprechend ausgebildete Steuer- und Auswertungseinheit oder eine Kombination aus beidem. Detektion und Auswertung können auch mindestens teilweise in einem Baustein oder Modul kombiniert werden.

Die Erfindung hat den Vorteil, dass über die Dopplerverschiebung eine zusätzliche Messgröße verfügbar wird, um den Reflektor sicher zu erfassen. Dadurch kommt es seltener zu Fehldetektionen oder Fehlschalten des Sensors durch ein Objekt, das mit dem Reflektor verwechselt wird. Die Objekterfassung wird deutlich robuster und zuverlässiger.

Der Reflektor ist bevorzugt an einem Aktor angeordnet, welcher den Reflektor in Bewegung versetzt. Damit wird aus dem Reflektor ein modulierter Reflektor, der eine durch den Aktor definierte, vorhersagbare Dopplerverschiebung erzeugt.

Der Aktor weist bevorzugt einen Ultraschallwandler auf. Der Reflektor wird dann von dem Ultraschallwandler in eine bekannte Schwingung versetzt. Das sorgt für eine ausreichende Bewegung, um eine Dopplerverschiebung zu erzeugen, die durch die Wandlereigenschaften und insbesondere dessen Frequenz wohldefiniert ist.

Der Aktor weist bevorzugt ein Photovoltaikelement auf, um sich zu versorgen. Der Aktor ist dem Reflektor zugeordnet, der zwar zu dem Sensor gehört, sich aber in deutlichem Abstand zu den übrigen Sensorkomponenten befindet. Daher wäre eine elektrische Verbindung unerwünscht. Aufgrund des Photovoltaikelements wird der Reflektor mit seinem Aktor autark, es bedarf keines Anschlusses. Besonders vorteilhaft ist, wenn das Photovoltaikelement wie der Reflektor zu der Sende-Empfangseinheit hin ausgerichtet ist, so dass der Lichtstrahl darauf fällt. Dann wird das Photovoltaikelement gänzlich unabhängig von Umgebungslicht zuverlässig immer dann mit Licht versorgt, wenn der Sensor in Betrieb ist.

Die Steuer- und Auswertungseinheit ist bevorzugt dafür ausgebildet zu erkennen, wenn die Dopplerverschiebung nicht einer erwarteten Dopplerverschiebung durch die Reflexion an dem Reflektor entspricht. Die Steuer- und Auswertungseinheit hat eine Erwartungshaltung, welche Dopplerverschiebung der Reflektor bewirkt. Das wird insbesondere aus den Eigenschaften des Aktors abgeleitet. Wird diese Erwartungshaltung nicht getroffen, so ist es nicht der Reflektor, der mit dem Lichtstrahl angetastet wurde. Eine Umsetzungsmöglichkeit basiert auf mindestens einer Vergleichsschwelle, die in Kenntnis der Eigenschaften des Aktors parametriert oder vor dem eigentlichen Betrieb während des Antastens des Reflektors eingelernt wird.

Lichtempfänger und/oder Steuer- und Auswertungseinheit sind bevorzugt dafür ausgebildet, die Dopplerverschiebung als Frequenzunterschied zwischen einer Frequenz des ausgesandten Lichtstrahls und des zurückgeworfenen Lichtstrahls zu bestimmen. Die Dopplerverschiebung wird dabei durch Vergleich mit der Sendefrequenz schon innerhalb der Messung bestimmt, was in der Regel einfacher ist. Alternativ wird zuerst die Empfangsfrequenz selbst gemessen und dann erst durch rechnerischen Vergleich mit der Sendefrequenz die Dopplerverschiebung gewonnen. Das Ergebnis ist in beiden Fällen das gleiche, nämlich der relative oder absolute Frequenzunterschied zwischen Sende- und Empfangsfrequenz.

Lichtempfänger und/oder Steuer- und Auswertungseinheit sind bevorzugt dafür ausgebildet, die Dopplerverschiebung in der Lichtfrequenz des Lichtstrahls zu bestimmen. Hierbei wird der Dopplereffekt auf die Frequenz des Lichts im optischen Spektrum ausgewertet, d.h. letztlich eine Blau- oder Rotverschiebung.

Der Lichtempfänger weist bevorzugt einen optischen Mischer auf. Der optische Mischer mischt die Lichtsignale der Sende- und Empfangsfrequenz und gibt den Frequenzunterschied an die Steuer- und Auswertungseinheit weiter, vorzugsweise schon als digitalen Wert.

Der Lichtempfänger ist bevorzugt als Spektrometer ausgebildet. Das ist eine Möglichkeit, die Empfangsfrequenz des zurückgeworfenen Lichtstrahls direkt zu messen und erst anschließend mit der Sendefrequenz zu vergleichen. Eine einfache Umsetzung verwendet ein frequenzselektiv brechendes Element, wie ein Prisma, und einen ortsaufgelösten Lichtempfänger, insbesondere einer Empfängerzeile. Aus dem Auftreffort kann dann auf die Empfangsfrequenz geschlossen werden.

Die Steuer- und Auswertungseinheit ist bevorzugt dafür ausgebildet, die Amplitude des ausgesandten Lichtstrahls mit einer Modulationsfrequenz zu modulieren und die Dopplerverschiebung der Modulationsfrequenz des zurückgeworfenen Lichtstrahls zu bestimmen. In dieser Ausführungsform wird nicht die optische Trägerfrequenz ausgewertet, sondern die vorzugsweise deutlich niedrigere Modulationsfrequenz, die einer elektronischen Auswertung deutlich besser zugänglich ist. Die Auswertung erfolgt hier anders als bei einem optischen Mischer erst nach dem Lichtempfang, indem beispielsweise das modulierte Ansteuerungssignal des Lichtsenders mit dem elektronischen Empfangssignal des Lichtempfängers gemischt wird.

Der Sensor ist bevorzugt als Reflexionslichtschranke ausgebildet, die einen Schaltausgang aufweist, dessen Schaltsignal anzeigt, ob der Lichtstrahl ein Objekt getroffen hat oder nicht. Der Zustand des Schaltausgangs entspricht einem binären Objektfeststellungssignal. Es zeigt kein Objekt genau dann, wenn der Reflektor erkannt wird. Ein Objekt im Strahlengang wird von der Reflexionslichtschranke nicht mit dem Reflektor verwechselt, weil die erwartete Dopplerverschiebung fehlt.

Der Sensor ist bevorzugt als Lichtgitter ausgebildet. Ein Lichtgitter ist zunächst im weiten Sinne eine Mehrfachanordnung von Lichtsendern und Lichtempfängern mit mehreren Lichtstrahlen, die jeweils auf einen Reflektor treffen. Dabei sind sowohl einzelne bewegliche Reflektoren denkbar als auch größere Reflektoren für mehrere Lichtstrahlen, beziehungsweise Aktoren, die mehrere Reflektoren oder größere Reflektoren bewegen. Ein Lichtgitter im engeren Sinne bezeichnet einen Sensor mit parallelen Lichtstrahlen in einer Ebene, die zumeist auch einen äquidistanten gegenseitigen Abstand haben.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

Fig. 1   eine schematische Darstellung einer Reflexionslichtschranke mit beweglich angeordnetem Reflektor;

Fig. 2   eine Detailansicht eines als Spektrometer ausgebildeten Detektors;

Fig. 3   eine schematische Darstellung einer Reflexionslichtschranke mit beweglich angeordnetem Reflektor und zusätzlichen Polarisatoren; und

Fig. 4   eine schematische Darstellung einer Reflexionslichtschranke in Autokollimationsanordnung.

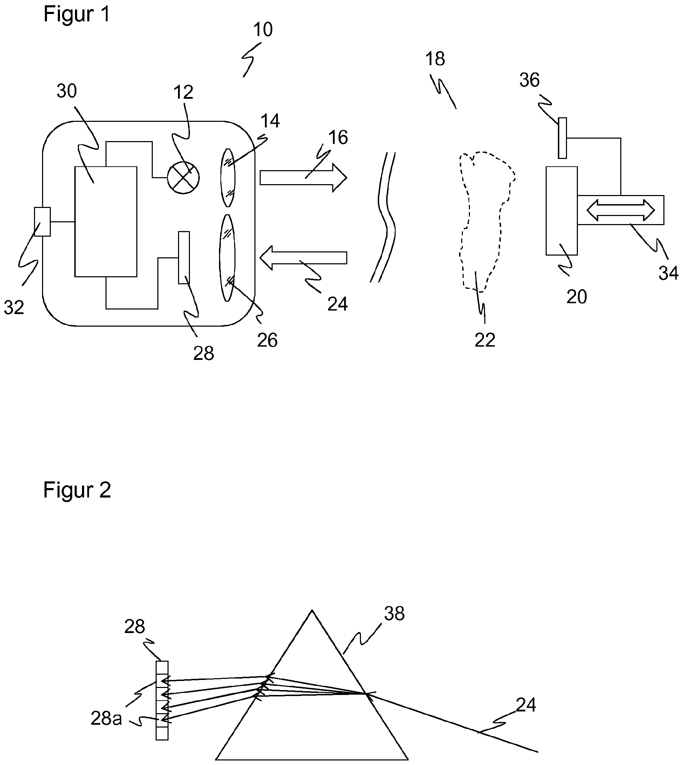

Figur 1 zeigt eine schematische Darstellung einer Reflexionslichtschranke als Beispiel eines erfindungsgemäßen optoelektronischen Sensors 10, die allein oder als Teil eines Lichtgitters eingesetzt wird. Aufgabe des Sensors 10 ist, bei Anwesenheit eines Objektes an einer bestimmten Stelle ein Objektfeststellungssignal zu erzeugen beziehungsweise ein Schaltsignal auszulösen.

Ein Lichtsender 12 ist vorzugsweise als frequenzstabilisierte Laserdiode ausgestaltet, die im Dauerbetrieb oder gepulst arbeitet. Mit Hilfe einer Sendeoptik 14 als Kollimator sendet der Lichtsender 12 einen Lichtstrahl 16 in einen Überwachungsbereich 18 aus.

Dort trifft der Lichtstrahl 16 auf einen Reflektor 20, beispielsweise einen Spiegel oder allgemeiner mit einem hochreflektierenden Material, insbesondere einen Retroreflektor. Falls sich ein Objekt 22 im Strahlengang des Lichtstrahls 16 befindet, so wird dieses Objekt 22 anstelle des Reflektors 20 getroffen. In beiden Fällen wird zumindest ein Teil des Lichtstrahls 16 reflektiert oder remittiert. Der zurückgeworfene Lichtstrahl 24 wird durch eine Empfangsoptik 26 auf einen Lichtempfänger 28 geführt und dort beispielsweise mittels einer Photodiode oder eines CCD- bzw. CMOS-Chips in ein elektrisches Empfangssignal umgesetzt. Wie die Sendeoptik 14 ist auch die Empfangsoptik 26 als einfache Sammellinse dargestellt und steht so stellvertretend für eine beliebige geeignete Optik.

Eine Steuer- und Auswertungseinheit 30 ist mit dem Lichtsender 12 und dem Lichtempfänger 28 verbunden, um den Lichtstrahl 16 zu erzeugen beziehungsweise auf das elektrische Empfangssignal zuzugreifen. Die Steuer- und Auswertungseinheit 30 umfasst vorzugsweise mindestens einen Digitalbaustein, wie einen Mikroprozessor, ein ASIC oder ein FPGA, und dann wird das Empfangssignal ohne eigene Darstellung vor oder bei dem Übergang in die Steuer- und Auswertungseinheit 30 digitalisiert.

Die Steuer- und Auswertungseinheit 30 erkennt, ob das Empfangssignal von dem Reflektor 20 oder einem Objekt 22 stammt. Ein entsprechendes binäres Objekterkennungssignal wird auf einen Schaltausgang 32 gelegt. Der Schaltausgang ist somit im Zustand "Aus", solange der Lichtstrahl 16 auf den Reflektor 20 trifft, und im Zustand "Ein", wenn sich ein Objekt 22 vor den Reflektor 20 schiebt. Selbstverständlich können die Zustände auch invers repräsentiert sein. Das Schaltsignal kann für einen nachgelagerten Verarbeitungsprozess insbesondere in der Automatisierungstechnik verwendet werden. Eine bevorzugte Montage eines Sensors 10 ist an einem Förderband, wo die geförderten Objekte 22 jeweils in den Lichtstrahl 16 ein- und wieder daraus austreten.

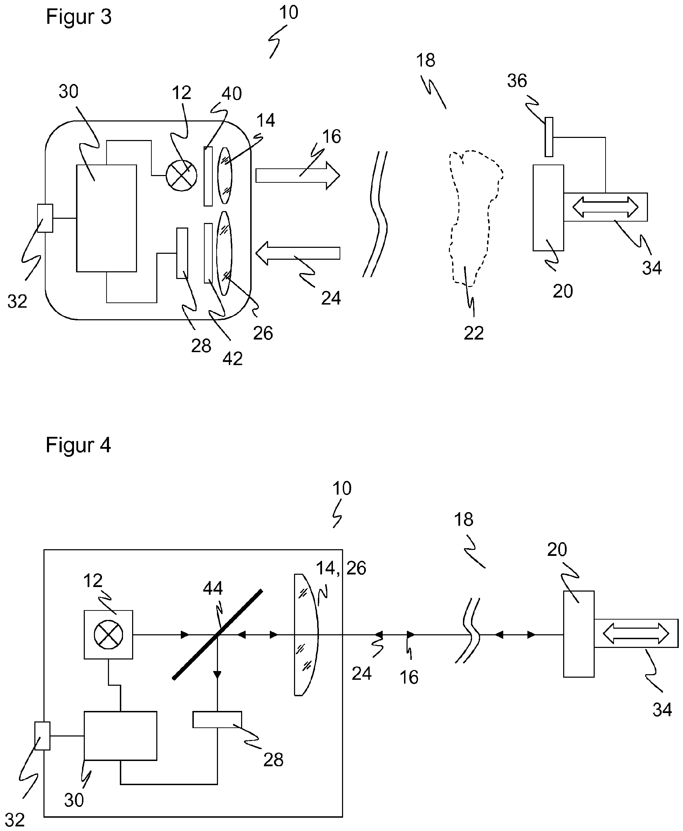

Die Objekterkennung der Steuer- und Auswertungseinheit 30 kann auf einem Schwellenvergleich des Pegels basieren, in der Erwartung, dass ein Objekt 22 regelmäßig schwächer reflektiert beziehungsweise remittiert als der Reflektor 20. Verlässlicher wird die Objekterkennung, wenn der Sensor 10 polarisiertes Licht verwendet, wie später unter Bezugnahme auf Figur 3 erläutert. Beides sind nur Beispiele für eine zusätzliche Erkennung des Reflektors 20, erfindungsgemäß werden Reflektor 20 und Objekt 22 anhand einer Dopplerverschiebung unterschieden, wie sogleich genauer ausgeführt.

Dazu ist der Reflektor 20 an einem Aktor 34 angeordnet, der den Reflektor 20 in Bewegung versetzt. Die Bewegung erfolgt möglichst schnell in Richtung zu dem Lichtsender 12 beziehungsweise davon weg. Je nach Geschwindigkeit der Bewegung des Reflektors 20 erfährt die Frequenz des Lichtstrahls 16 während der Reflexion eine Dopplerverschiebung, der zurückgeworfene Lichtstrahl 24 hat deshalb eine dopplerverschobene, andere Frequenz als der ausgesandte Lichtstrahl 16.

In einer bevorzugten Ausführungsform weist der Aktor 34 einen Ultraschallwandler auf. Der Reflektor 20 ist demnach beweglich auf dem Ultraschallwandler gelagert und schwingt mit dessen Ultraschalfrequenz. Dadurch kann ein sehr kompakter Aktor 34 realisiert werden, der dennoch nennenswerte Bewegungen des Reflektors 20 erzeugt.

Für die Detektion der Dopplerverschiebung gibt es verschiedene Möglichkeiten. In einer Ausführungsform weist der Lichtempfänger 28 einen optischen Mischer auf, der das Sendesignal mit dem Empfangssignal mischt und den Frequenzunterschied vorzugsweise schon für die Steuer- und Auswertungseinheit 30 von analog nach digital wandelt. In einer anderen Ausführungsform, die im Anschluss unter Bezugnahme auf die Figur 2 erläutert wird, misst der Lichtempfänger direkt die Frequenz des zurückgeworfenen Lichtstrahls 24, woraus dann durch rechnerischen Vergleich mit der bekannten Frequenz des Lichtsenders 12 ebenfalls die Dopplerverschiebung resultiert.

Eine weitere alternative Ausführungsform basiert nicht auf der Trägerfrequenz des Lichts im optischen Spektrum, sondern einer künstlichen Modulationsfrequenz, die praktisch beliebig und insbesondere deutlich kleiner gewählt werden kann. Dazu moduliert der Lichtsender 12 die Amplitude des ausgesandten Lichtstrahls 16, und das Empfangssignal des Lichtsenders 28 weist eine entsprechend dopplerverschobene Modulationsfrequenz auf. Die Dopplerverschiebung der Modulationsfrequenz kann dann beispielsweise durch einen Mischer auf elektrischer Ebene erfasst werden.

Die Steuer- und Auswertungseinheit 30 hat nun einer Erwartungshaltung, welche Dopplerverschiebung auftritt, solange der Lichtstrahl 16 auf den Reflektor 20 trifft. Dessen künstliche Bewegung durch den Aktor 34 ist ja bekannt, so dass diese Dopplerverschiebung vorhergesagt und die Erwartungshaltung entsprechend parametrisiert werden kann. Alternativ wird die Erwartungshaltung durch einen Einlernvorgang kalibriert, indem die Dopplerverschiebung gemessen wird, wobei sichergestellt wird, dass solange der Lichtstrahl 16 tatsächlich auf den Reflektor 20 fällt. Die Erwartungshaltung kann beispielsweise als Toleranzintervall oder mindestens ein Schwellwert der Dopplerverschiebung erfasst werden. Zeigt ein Vergleich in der Steuer- und Auswertungseinheit 30, dass die gemessene Dopplerverschiebung nicht der Erwartung entspricht, so wird auf ein Objekt 22 vor dem Reflektor 20 geschlossen und eine entsprechende Schaltentscheidung generiert.

Man kann die Dopplerverschiebung bei einem Reflektor 20, der von einem Ultraschallwandler als Aktor 34 bewegt wird, überschlägig wie folgt quantifizieren. Dazu sei angenommen, dass der Stellweg des Ultraschallwandlers während der Schwingungen 100 $\mu$m und die Periode 50$\mu$s entsprechend einer Ultraschallfrequenz von 5kHz betragen. Damit ergibt sich eine mittlere Geschwindigkeit von v = 1m/s. Beispielhaft erzeugtes blaues Sendelicht hat eine Wellenlänge von 400 nm oder eine Frequenz von $f_S$=750 THz.

Als relativistische Dopplerverschiebung $f_B$ mit

$$f_B = \frac{f_S \sqrt{1 - \frac{v^2}{c^2}}}{1 - \frac{v}{c}} = f_S \sqrt{\frac{c+v}{c-v}}$$

resultiert dann ein Wert von etwa 2,5 MHz. Bei rotem Licht der Wellenlänge 650 nm anstelle von blauem Licht käme man auf eine Dopplerverschiebung von etwa 1,5 MHz.

Die Bestimmung dieser Dopplerverschiebung bedeutet einen gewissen messtechnischen Aufwand. Wird nicht die Dopplerverschiebung des Lichts selbst gemessen, sondern der Lichtstrahl 16 in seiner Amplitude mit einer Modulationsfrequenz variiert, so verringert sich dieser Aufwand. Es muss dann nur die deutlich geringere Modulationsfrequenz messtechnisch erfasst werden, so dass beispielsweise eine A/D-Wandlung wesentlich weniger Aufwand bedeutet.

Weiterhin besteht die Möglichkeit, die Dopplerverschiebung dadurch zu vergrößern, dass der Lichtstrahl 16 mehrfach auf den bewegten Reflektor 20 trifft. Der Lichtstrahl 16 wird also in einer solchen Ausführungsform mehrfach auf den bewegten Reflektor 20 geführt. Dazu wird der Reflektor 20 mit mindestens einem weiteren starren oder nochmals beweglichen Reflektor kombiniert und der Lichtstrahl 16 mehrfach zwischen diesen Reflektoren hin- und hergeworfen, ehe der zurückgeworfene Lichtstrahl 24 zum Sensor 10 zurückkehrt. So wird der bereits dopplerverschobene Lichtstrahl 16 ein weiteres Mal oder mehrere Male erneut dopplerverschoben.

Der Reflektor 20 mit seinem Aktor 34 gehört zwar als kooperatives Ziel zu dem Sensor 10, ist aber vorzugsweise nicht daran angeschlossen, da dies mit Montageaufwand und störenden Leitungen verbunden wäre. Um eine Energieversorgung des Aktors 36 beziehungsweise Ultraschallwandlers bereitzustellen, kann vorteilhaft die optische Sendeenergie des Lichtsenders 12 genutzt werden. Dazu ist an dem Reflektor 20 ein Photovoltaikelement 36 angeordnet, welches den Aktor 34 versorgt und beispielsweise ein Piezoelement des Ultraschallwandlers anregt. Das Photovoltaikelement 36 könnte sich prinzipiell aus dem Umgebungslicht speisen. Eine Anordnung im Lichtstrahl 16 hat aber den Vorteil, dass immer eine definierte Lichtmenge verfügbar ist, wenn der Sensor 10 Objekte 22 erfassen soll. Alternativ könnte auch eine Batterie oder eine andere Methode des Energie-Harvesting genutzt werden.

Figur 2 zeigt eine Detailansicht einer Ausführungsform des Lichtempfängers 28. Mit diesem Lichtempfänger 28 wird zunächst nicht die Dopplerverschiebung, sondern die Frequenz des zurückgeworfenen Lichtstrahls 24 gemessen. Im Ergebnis ist das eine Bestimmung der Dopplerverschiebung, da der Frequenzunterschied durch die Dopplerverschiebung mittels Vergleich mit der bekannten Sendefrequenz sofort erfassbar ist.

Der in Figur 2 gezeigte Lichtempfänger ist ein Beispiel eines Spektrometers. Es ist hier beispielhaft sehr einfach als Prisma 38 in Kombination mit einer Empfängerzeile mit mehreren Lichtempfangselementen 28a ausgebildet. Je nach Frequenz des zurückgeworfenen Lichtstrahls 24 nach der Dopplerverschiebung wird das Empfangslicht in dem Prisma 38 auf ein anderes Lichtempfangselement 28a gebrochen. Um von der Empfängerzeile messbare frequenzabhängige Verschiebungen zu erhalten, sollte der Aktor 34 möglichst hohe Geschwindigkeiten und damit eine ausreichende Dopplerverschiebung erzeugen. Andere Spektrometer können bereits kleine Dopplerverschiebungen auflösen.

Figur 3 zeigt eine schematische Ansicht einer weiteren Ausführungsform des Sensors 10. Die gezeigte Reflexionslichtschranke entspricht weitgehend derjenigen der Figur 1. Zusätzlich sind im Sende- und Empfangsstrahlengang Polarisationsfilter 40, 42 angeordnet. Der Reflektor 20 ist in dieser Ausführungsform polarisationserhaltend beziehungsweise dreht die Polarisation in definierter Weise, so wie beispielsweise ein Retroreflektor. Die beiden Polarisationsfilter 40, 42 sind in der Polarisationsrichtung entsprechend einer Drehung durch den Reflektor 20 zueinander verdreht.

Ein Objekt 22 im Strahlengang weist diese erwartete Polarisationserhaltung und -drehung in aller Regel nicht auf. Daher kommt bei einem zurückgeworfenen Lichtstrahl 22 von dem Objekt 22 praktisch kein Licht auf dem Lichtempfänger 28 an, woran Reflektor 20 und Objekt 22 ein weiteres Mal voneinander unterschieden werden. Allerdings gibt es insbesondere spiegelnde und/oder nahe Objekte 22, die noch genug Licht mit passender Polarisation zurückwerfen. Damit würde es zu einem Fehlschalten kommen, wenn der Sensor 10 sich allein auf die Polarisation als Unterscheidungsmittel verließe. Ähnlich kann es auch erfindungsgemäß zu einem Fehlschalten kommen, wenn ein Objekt 22 sich zufällig gerade mit der Geschwindigkeit bewegt, mit welcher auch der Aktor 34 den Reflektor 20 bewegt. Kombiniert man aber beide Maßnahmen, also Polarisation und Messung der Dopplerverschiebung, so ist ein solcher Zufall nahezu ausgeschlossen und das Auftreten von Fehlschalten damit zumindest erheblich reduziert.

Figur 4 zeigt eine schematische Ansicht einer weiteren Ausführungsform des Sensors 10 mit einer Autokollimationsanordnung anstelle der bisherigen biaxialen Anordnung von Lichtsender 12 und Lichtempfänger 28. Dazu ist ein Strahlteiler 44 vorgesehen, den der ausgesandte Lichtstrahl 16 transmittiert, während der zurückgeworfene Lichtstrahl 24 dort auf den Lichtempfänger 28 reflektiert wird. Es gibt jeweils reflektierte beziehungsweise transmittierte Lichtanteile, die konstruktionsbedingt der Messung verlorengehen und die vorzugsweise geeignet absorbiert werden. Dafür ist ein kompakterer Aufbau mit nur einer gemeinsamen Sende- und Empfangsoptik 14, 16 möglich. Die Objekterkennung einschließlich der Bestimmung einer Dopplerverschiebung, insbesondere verursacht durch eine Bewegung des Reflektors 20 durch einen Aktor 34, funktioniert bei dieser Anordnung wie oben beschrieben. Es ist auch möglich, Polarisationsfilter zu ergänzen, die dann zwischen Lichtsender 12 und Strahlteiler 44 beziehungsweise Strahlteiler 44 und Lichtempfänger 28 anzuordnen wären.

**Patentansprüche**

1. Optoelektronischer Sensor (10) mit einem Lichtsender (12) zum Aussenden eines Lichtstrahls (16) in einen Überwachungsbereich (18), einem in dem Überwachungsbereich (18) angeordneten Reflektor (20), einem Lichtempfänger (28) zum Erzeugen eines Empfangssignals aus dem von dem Reflektor (20) zurückgeworfenen Lichtstrahl (24) und einer Steuer- und Auswertungseinheit (30), die dafür ausgebildet ist, anhand des Empfangssignals zu bestimmen, ob der Lichtstrahl (16) ein Objekt (22) getroffen hat,
   **dadurch gekennzeichnet,**
   **dass** Lichtempfänger (28) und/oder Steuer- und Auswertungseinheit (30) dafür ausgebildet sind, eine Dopplerverschiebung des zurückgeworfenen Lichtstrahls (24) zu bestimmen.

2. Sensor (10) nach Anspruch 1,
   wobei der Reflektor (20) an einem Aktor (34) angeordnet ist, welcher den Reflektor (20) in Bewegung versetzt.

3. Sensor (10) nach Anspruch 2,
   wobei der Aktor (34) einen Ultraschallwandler aufweist.

4. Sensor (10) nach einem der Ansprüche 2 oder 3,
   wobei der Aktor (34) ein Photovoltaikelement (36) aufweist, um sich zu versorgen, insbesondere aus dem Lichtstrahl (16).

5. Sensor (10) nach einem der vorhergehenden Ansprüche,
   wobei die Steuer- und Auswertungseinheit (30) dafür ausgebildet ist zu erkennen, wenn die Dopplerverschiebung nicht einer erwarteten Dopplerverschiebung durch die Reflexion an dem Reflektor (20) entspricht.

6. Sensor (10) nach einem der vorhergehenden Ansprüche,
   wobei Lichtempfänger (28) und/oder Steuer- und Auswertungseinheit (30) dafür ausgebildet sind, die Dopplerverschiebung als Frequenzunterschied zwischen einer Frequenz des ausgesandten Lichtstrahls (16) und des zurückgeworfenen Lichtstrahls (24) zu bestimmen.

7. Sensor (10) nach einem der vorhergehenden Ansprüche,
   wobei Lichtempfänger (28) und/oder Steuer- und Auswertungseinheit (30) dafür ausgebildet sind, die Dopplerverschiebung in der Lichtfrequenz des Lichtstrahls (16, 24) zu bestimmen.

8. Sensor (10) nach Anspruch 7,

wobei der Lichtempfänger (28) einen optischen Mischer aufweist.

9. Sensor (10) nach Anspruch 7, wobei der Lichtempfänger (28) als Spektrometer (38, 28a) ausgebildet ist.

10. Sensor (10) nach einem der Ansprüche 1 bis 6, wobei die Steuer- und Auswertungseinheit (30) dafür ausgebildet ist, die Amplitude des ausgesandten Lichtstrahls (16) mit einer Modulationsfrequenz zu modulieren und die Dopplerverschiebung der Modulationsfrequenz des zurückgeworfenen Lichtstrahls (24) zu bestimmen.

11. Sensor (10) nach einem der vorhergehenden Ansprüche, der als Reflexionslichtschranke ausgebildet ist, die einen Schaltausgang (32) aufweist, dessen Schaltsignal anzeigt, ob der Lichtstrahl (16) ein Objekt (22) getroffen hat oder nicht.

12. Sensor (10) nach einem der vorhergehenden Ansprüche, der als Lichtgitter ausgebildet ist.

13. Verfahren zum Erfassen eines Objekts (22), wobei ein Lichtstrahl (16) in einen Überwachungsbereich (18) in Richtung auf einen Reflektor (20) ausgesandt und aus dem an dem Reflektor (20) oder einem vor dem Reflektor (20) angeordneten Objekt (22) zurückgeworfen Lichtstrahl (24) ein Empfangssignal erzeugt und dieses ausgewertet wird, um zu bestimmen, ob der Lichtstrahl (16) den Reflektor (20) oder das Objekt (22) getroffen hat, **dadurch gekennzeichnet, dass** eine Dopplerverschiebung des zurückgeworfenen Lichtstrahls (24) bestimmt wird.

Figur 1

Figur 2

Figur 3

Figur 4

**Europäisches Patentamt**
**European Patent Office**
**Office européen des brevets**

# EUROPÄISCHER RECHERCHENBERICHT

Nummer der Anmeldung

EP 19 15 7818

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | GB 1 267 090 A (EDWARD ROY PIKE) 15. März 1972 (1972-03-15) | 1-3,5,7, 8,11,13 | INV. G01V8/14 |
| Y | * Seite 1 - Seite 2 * | 4,6,9, 10,12 | |
| | * Seite 3; Anspruch 1 * | | |
| | * Abbildung 1 * | | |
| | ----- | | |
| X | WO 2011/088514 A1 (AUTOMATIC TECHNOLOGY AUSTRALIA PTY LTD) 28. Juli 2011 (2011-07-28) | 1,13 | |
| Y | * Seite 5, Zeile 7 - Zeile 15 * | 4 | |
| | * Seite 13, Zeile 5 - Zeile 16 * | | |
| | * Abbildungen 2,3 * | | |
| | ----- | | |
| Y | WO 01/06473 A2 (GOU LITE LTD [IL]; KINROT URI [IL]) 25. Januar 2001 (2001-01-25) | 6,9,10, 12 | |
| | * Seite 7 - Seite 8 * | | |
| | * Seite 17 * | | |
| | * Seite 21 * | | |
| | * Abbildungen 3,6-8 * | | |
| | ----- | | |

RECHERCHIERTE SACHGEBIETE (IPC)

G01V
G01S

Der vorliegende Recherchenbericht wurde für alle Patentansprüche erstellt

| Recherchenort | Abschlußdatum der Recherche | Prüfer |
|---|---|---|
| Den Haag | 21. Juni 2019 | Gassmann, Martin |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 19 15 7818

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-06-2019

| Im Recherchenbericht angeführtes Patentdokument | Datum der Veröffentlichung | Mitglied(er) der Patentfamilie | Datum der Veröffentlichung |
|---|---|---|---|
| GB 1267090 A | 15-03-1972 | KEINE | |
| WO 2011088514 A1 | 28-07-2011 | AU 2011207114 A1<br>AU 2012101044 A4<br>CN 102933783 A<br>EP 2526246 A1<br>NZ 601270 A<br>US 2013042530 A1<br>WO 2011088514 A1<br>ZA 201205413 B | 02-08-2012<br>09-08-2012<br>13-02-2013<br>28-11-2012<br>31-10-2014<br>21-02-2013<br>28-07-2011<br>28-01-2015 |
| WO 0106473 A2 | 25-01-2001 | AU 5843300 A<br>CN 1367877 A<br>EP 1234286 A2<br>JP 2003505676 A<br>WO 0106473 A2 | 05-02-2001<br>04-09-2002<br>28-08-2002<br>12-02-2003<br>25-01-2001 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006048297 A1
- DE 19913156 B4
- EP 2256522 B1
- DE 102006053229 B4
- DE 102011050634 B4
- DE 19801632 C2
- DE 102016121395 A1